# EUROPEAN PATENT APPLICATION

(11) **EP 4 836 021 A1**
(43) Date of publication of application: **04.11.2026**
(21) Application number: 24915093.9
(22) Date of filing: 13.12.2024
(51) Int. Cl.: H01M 4/62, H01M 4/36

(54) **NEGATIVE POLE PIECE AND PREPARATION METHOD THEREFOR, BATTERY, AND ELECTRICAL APPARATUS**

(30) Priority: 03.01.2024 CN 202410007480
(71) Applicant: Contemporary Amperex Technology Co., Limited, Ningde, Fujian 352100 (CN)
(72) Inventor: BAI, Wenlong, Ningde, Fujian 352100 (CN); LI, Qi, Ningde, Fujian 352100 (CN); YOU, Xingyan, Ningde, Fujian 352100 (CN); WU, Baozhen, Ningde, Fujian 352100 (CN); YE, Yonghuang, Ningde, Fujian 352100 (CN); FU, Chenghua, Ningde, Fujian 352100 (CN); JIN, Haizu, Ningde, Fujian 352100 (CN); WU, Kai, Ningde, Fujian 352100 (CN)
(74) Representative: Gong, Jinping
(86) International application number: PCT/CN2024/139242
(87) International publication number: WO 2025/145878

(57) **Abstract**

The application discloses a negative pole piece and a preparation method therefor, a battery, and an electrical apparatus. The negative pole piece comprises: a negative electrode current collector and a negative electrode active material layer. The negative electrode active material layer is arranged on at least one side of the negative electrode current collector. The negative electrode active material layer comprises dielectric material particles, and the volume average particle size Dv50 of the dielectric material particles is D₁, wherein D₁ is 400 nm-2000 nm. On the basis of the total mass of the negative electrode active material layer, the proportion of the dielectric material particles is 0.1%-10%. Therefore, the negative pole piece in the present application uses the dielectric material particles having the described particle size and content, such that the quick charging performance of the battery can be improved.

## Description

### TECHNICAL FIELD

This application belongs to the field of batteries, and specifically relates to a negative electrode sheet and a preparation method thereof, a battery, and an electric apparatus.

### BACKGROUND

Secondary batteries are widely used in energy storage power systems such as hydraulic, thermal, wind, and solar power stations, as well as in various fields such as electric tools, electric bicycles, electric motorcycles, electric vehicles, military equipment, and aerospace. As the application range of secondary batteries becomes increasingly wide, the requirements for their performance are becoming increasingly stringent, for example, they are required to have fast charging capability. However, the performance of a negative electrode sheet in the battery restricts the fast charging capability to some extent. Therefore, it is urgent to improve the performance of negative electrode sheets.

### SUMMARY

In view of the technical problems existing in the background art, this application provides a negative electrode sheet, aiming to improve the fast charging performance of batteries including the same.

To achieve the above objective, according to a first aspect, this application proposes a negative electrode sheet, including:
a negative electrode current collector; and
a negative electrode active material layer, where the negative electrode active material layer is disposed on at least one side of the negative electrode current collector, the negative electrode active material layer includes dielectric material particles, a volume-based mean particle size Dᵥ50 of the dielectric material particles is D₁, D₁ is 400 nm to 2000 nm, and based on a total mass of the negative electrode active material layer, a proportion of the dielectric material particles is 0.1% to 10%.

This application has at least the following beneficial effects: the negative electrode sheet of this application adopts the dielectric material particles with the above particle size and content, and thus can improve the fast charging performance of a battery.

In some embodiments, D₁ is 600 nm to 1000 nm. Thus, the fast charging performance of the battery can be improved.

In some embodiments, based on the total mass of the negative electrode active material layer, the proportion of the dielectric material particles is 0.5% to 3%. Thus, the fast charging performance of the battery can be improved.

In some embodiments, a relative dielectric constant of the dielectric material particles is 1000 to 10000, optionally from 1500 to 5000. Thus, the fast charging performance of the battery can be improved.

In some embodiments, the dielectric material particles include at least one of barium titanate, lead titanate, lithium niobate, lead zirconate titanate, lead metaniobate, or lithium barium lead niobate. Thus, the fast charging performance of the battery can be improved.

In some embodiments, the dielectric material particles include doping ions, and the doping ions include at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺. Thus, the fast charging performance of the battery can be improved.

In some embodiments, the dielectric material particles include at least one of barium titanate doped with trivalent rare earth metal ions, barium titanate doped with pentavalent ions, lead titanate doped with pentavalent ions, or lead zirconate titanate doped with pentavalent ions, and the pentavalent ions include at least one of Nb⁵⁺, W⁵⁺, or Mo⁵⁺. Thus, the fast charging performance of the battery can be improved.

In some embodiments, the trivalent rare earth metal ions include at least one of Sc³⁺, Y³⁺, or Yb³⁺. Thus, the fast charging performance of the battery can be improved.

In some embodiments, the barium titanate includes a tetragonal crystal form. Thus, the fast charging performance of the battery can be improved.

In some embodiments, a BET specific surface area of the dielectric material particles is 0.8 m²/g to 7 m²/g, optionally from 1.8 m²/g to 2 m²/g. Thus, the fast charging performance of the battery can be improved.

In some embodiments, the negative electrode active material layer includes a negative electrode active material, and a volume-based mean particle size Dᵥ50 of the negative electrode active material is D₂, where D₁ ≤ D₂, optionally D₁ < D₂. Thus, the fast charging performance of the battery can be improved.

In some embodiments, D₂ is 2 µm to 20 µm, optionally from 8 µm to 13 µm. Thus, the fast charging performance of the battery can be improved.

In some embodiments, the negative electrode active material layer includes: a first negative electrode active material layer, where the first negative electrode active material layer is disposed on at least one side of the negative electrode current collector; and a second negative electrode active material layer, where the second negative electrode active material layer is disposed on a side of the first negative electrode active material layer away from the negative electrode current collector. The first negative electrode active material layer and/or the second negative electrode active material layer includes the dielectric material particles. Thus, the fast charging performance of the battery can be improved.

In some embodiments, at least a portion of a surface of the negative electrode active material is provided with a coating layer, and the coating layer includes the dielectric material particles. Thus, the fast charging performance and cycling performance of the battery can be improved.

In some embodiments, the negative electrode active material includes at least one of artificial graphite, natural graphite, soft carbon, hard carbon, a silicon-based material, a tin-based material, or titanate.

According to a second aspect of this application, this application proposes a preparation method of a negative electrode sheet, including:
forming a negative electrode active material layer on at least one side of a negative electrode current collector, where the negative electrode active material layer includes dielectric material particles, a volume-based mean particle size Dᵥ50 of the dielectric material particles is D₁, D₁ is 400 nm to 2000 nm, and based on a total mass of the negative electrode active material layer, a proportion of the dielectric material particles is 0.1% to 10%.

Thus, a battery including the negative electrode sheet obtained by this method has excellent fast charging performance.

According to a third aspect of this application, this application proposes a battery, including the negative electrode sheet according to the first aspect or a negative electrode sheet obtained by the method according to the second aspect. Thus, the battery has excellent fast charging performance.

In some embodiments, the battery includes a lithium-ion battery or a sodium-ion battery.

According to a fourth aspect of this application, this application proposes an electric apparatus, including the battery according to the third aspect.

Additional aspects and advantages of this application are partially given in the following description, and some of them become apparent from the following description, or be learned through practice of this application.

### BRIEF DESCRIPTION OF DRAWINGS

By reading the detailed description of the preferred embodiments below, various other advantages and benefits become clear and apparent to those of ordinary skill in the art. The drawings are only for the purpose of illustrating the preferred embodiments and are not construed as limiting this application. Moreover, the same reference signs are used to represent the same components throughout the drawings. In the drawings:
FIG. 1 is a schematic structural diagram of a negative electrode sheet according to an embodiment of this application.
FIG. 2 is an XRD pattern of barium titanate according to an embodiment of this application.
FIG. 3 is a schematic structural diagram of a negative electrode sheet according to another embodiment of this application.
FIG. 4 is a schematic diagram of a battery cell according to an embodiment of this application.
FIG. 5 is an exploded view of the battery cell according to an embodiment of this application shown in FIG. 4.
FIG. 6 is a schematic diagram of a battery module according to an embodiment of this application.
FIG. 7 is a schematic diagram of a battery pack according to an embodiment of this application.
FIG. 8 is an exploded view of the battery pack according to an embodiment of this application shown in FIG. 7.
FIG. 9 is a schematic diagram of an electric apparatus using a battery as a power source according to an embodiment of this application.
FIG. 10 is a photograph of a negative electrode sheet disassembled from a battery obtained in Comparative Example 4 after cycling.
FIG. 11 is a SEM image of a negative electrode sheet disassembled from a battery obtained in Comparative Example 4 after cycling.

Description of reference signs:
10. negative electrode sheet; 100. negative electrode current collector; 200. negative electrode active material layer; 21. first negative electrode active material layer; 22. second negative electrode active material layer; 1. battery cell; 11. shell; 12. electrode assembly; 13. cover plate; 2. battery module; 3. battery pack; 31. upper box body; and 32. lower box body.

### DETAILED DESCRIPTION OF EMBODIMENTS

The embodiments of the technical solutions of this application are described in detail below. The following embodiments are only used to more clearly illustrate the technical solutions of this application and thus serve as examples only, and cannot be used to limit the protection scope of this application.

As used herein, reference to "an embodiment" means that a particular feature, structure, or characteristic described in connection with this embodiment can be included in at least one embodiment of this application. The phrase appearing at various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

The "range" disclosed in this application is defined in the form of a lower limit and an upper limit, and a given range is defined by selecting a lower limit and an upper limit, where the selected lower limit and upper limit define the boundaries of the particular range. A range defined in this way may include endpoints or may not include endpoints, and the endpoints can be arbitrarily combined, that is, any lower limit can be combined with any upper limit to form a range. For example, if ranges of 60 to 120 and 80 to 110 are listed for a particular parameter, ranges of 60 to 110 and 80 to 120 are also contemplated. In addition, if minimum range values 1 and 2 are listed, and if maximum range values 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where a and b are both real numbers. For example, a numerical range "0 to 5" means that all real numbers between "0 to 5" have been listed herein, and "0 to 5" is just an abbreviated representation of combinations of these numbers. In addition, when a parameter is expressed as an integer greater than or equal to 2, it is equivalent to disclosing that the parameter is, for example, an integer 2, 3, 4, 5, 6, 7, 8, 9, 10, 11, 12, or the like.

Unless otherwise specified, all embodiments and optional embodiments of this application can be combined with each other to form a new technical solution.

Unless otherwise specified, all technical features and optional technical features of this application can be combined with each other to form a new technical solution.

Unless otherwise specified, all steps of this application may be performed sequentially or randomly, preferably sequentially. For example, the method includes steps (a) and (b), meaning that the method may include steps (a) and (b) performed sequentially, or may include steps (b) and (a) performed sequentially. For example, when it is mentioned that the method may further include step (c), it means that step (c) may be added to the method in any order, for example, the method may include steps (a), (b), and (c), may include steps (a), (c), and (b), may include steps (c), (a), and (b), or the like.

At present, from the development of the market situation, the application of secondary batteries is becoming increasingly wide. Secondary batteries are not only applied in energy storage power systems such as hydraulic, thermal, wind, and solar power stations, but also widely applied in electric vehicles such as electric bicycles, electric motorcycles and electric vehicles, as well as in various fields such as military equipment and aerospace.

As the application range of secondary batteries becomes increasingly wide, the requirements for their performance are becoming increasingly stringent, for example, they are required to have fast charging capability. At present, dielectric material particles are added to negative electrode sheets to improve the fast charging performance of batteries. However, due to an excessively small particle size of dielectric material particles, agglomeration is prone to occur during slurry preparation, which affects the exertion of performance of dielectric material particles.

The negative electrode sheet disclosed in the embodiments of this application is applicable to lithium-ion batteries and sodium-ion batteries, and the battery disclosed in the embodiments of this application can be used in electric devices using a battery as a power source or various energy storage systems using a battery as an energy storage element. The electric devices may include but are not limited to mobile phones, tablets, notebook computers, electric toys, electric tools, battery cars, electric vehicles, ships, and spacecraft. The electric toys may include fixed or mobile electric toys, such as game consoles, electric toy cars, electric toy ships, and electric toy airplanes. The spacecraft may include airplanes, rockets, space shuttles, spaceships, and the like.

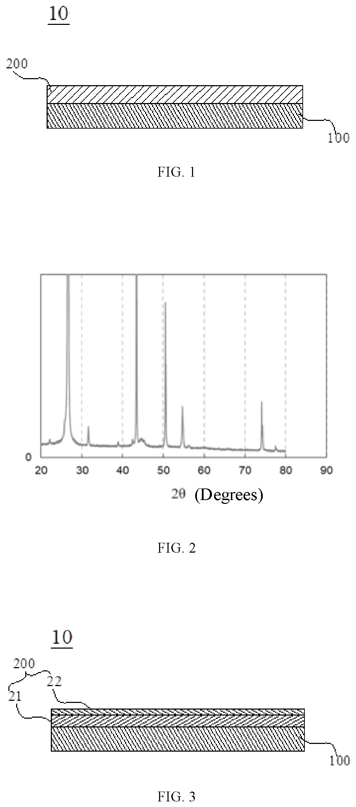

According to a first aspect, this application proposes a negative electrode sheet. Referring to FIG. 1, the negative electrode sheet 10 includes a negative electrode current collector 100 and a negative electrode active material layer 200. The negative electrode active material layer 200 is disposed on at least one side of the negative electrode current collector 100. The negative electrode active material layer 200 includes dielectric material particles. A volume-based mean particle size Dᵥ50 of the dielectric material particles is D₁, where D₁ is 400 nm to 2000 nm. Based on a total mass of the negative electrode active material layer 200, a proportion of the dielectric material particles is 0.1% to 10%.

In this application, the "dielectric material particles" refer to a type of materials that exhibit excellent insulating properties in an electric field, which can separate charges and store electrical energy without losing the charges.

In this application, adding the dielectric material particles with the above particle size and content to the negative electrode sheet 10 can improve the fast charging performance of a battery. It may be because that the dielectric material particles with the particle size provided in this application is added to the negative electrode sheet 10, and due to a large particle size of the dielectric material particles, the dielectric material particles are not prone to agglomeration, and no additional dispersant is required, so that the performance of the dielectric material particles can be fully exerted, and the cooperation of the above content can improve the fast charging performance of the battery.

A process by which the above dielectric material particles exert their performance is speculated as follows: during charging of a battery including the negative electrode sheet 10 of this application, when the dielectric material particles are under the action of an electric field, centers of positive and negative charges in the material are separated, generating a counter electric field inside. Under the action of this counter electric field, a concentration of electrons on a surface of the negative electrode active material may decrease. Since a SEI film (solid electrolyte interphase film) formed on the surface of the negative electrode active material is formed by reduction of an electrolyte solution solvent at the negative electrode active material after the electrolyte solution solvent gains electrons, the decrease in concentration of the electrons on the surface of the negative electrode active material results in formation of a thin SEI film at a three-phase interface of the dielectric material particles, the negative electrode active material, and the electrolyte solvent, reducing loss of active ions and the impedance of the SEI film, and shortening a migration path of the active ions in the SEI film, thereby improving the fast charging performance of the battery and reducing electrolyte solution consumption. In addition, the counter electric field generated by the dielectric material particles on the surface of the negative electrode active material exhibits negative electricity, so that active ions accumulated on the surface of the negative electrode active material may be attracted and uniformly distributed, reducing the risk of formation of dendrites due to accumulation of active ions on a local surface of the negative electrode sheet. Moreover, the counter electric field generated by the dielectric material particles may reduce the desolvation barrier of active ions, increasing the desolvation rate of active ions and the diffusion rate of active ions in the SEI film, thereby further improving the fast charging performance of the battery.

In some embodiments of this application, the volume-based mean particle size Dᵥ50 of the dielectric material particles is D₁, where D₁ is 400 nm to 2000 nm, such as 400 nm to 1900 nm, 400 nm to 1800 nm, 500 nm to 1700 nm, 600 nm to 1600 nm, 700 nm to 1500 nm, 800 nm to 1400 nm, 900 nm to 1300 nm, 1000 nm to 1200 nm, or 1000 nm to 1100 nm. In some other embodiments, the volume-based mean particle size Dᵥ50 of the dielectric material particles is 600 nm to 1000 nm.

In some embodiments of this application, based on the total mass of the negative electrode active material layer 200, the proportion of the dielectric material particles is 0.1% to 10%, such as 0.3% to 9.8%, 0.5% to 9.5%, 0.6% to 9.2%, 0.7% to 9%, 0.8% to 8.8%, 0.9% to 8.5%, 1% to 8%, 1.1% to 7.8%, 1.2% to 7.5%, 1.3% to 7.2%, 1.5% to 7%, 1.8% to 6.5%, 2% to 6%, 2.5% to 5.5%, 2.8% to 5%, 3% to 4.5%, or 3.5% to 4%. In some other embodiments, based on the total mass of the negative electrode active material layer 200, the proportion of the dielectric material particles is 0.5% to 3%. Thus, the fast charging and cycling performance of the battery can be improved.

In this application, the volume-based mean particle size Dᵥ50 of the dielectric material particles refers to a particle size at which the cumulative volume distribution percentage reaches 50%. A test method for the volume-based mean particle size Dᵥ50 of the dielectric material particles in the negative electrode sheet 10 is as follows:
(1) scraping powder from the negative electrode sheet 10, getting a sample, calcining the sample to 600°C to completely calcine a binder, the negative electrode active material, and the like (after calcining, mixing a silicon-based negative electrode active material system with a sodium hydroxide solution), and then adding water for filtration; and
(2) with reference to the standard GB/T 19077-2016, using a laser particle size analyzer (for example, Malvern Master Size 3000) to test the volume-based mean particle size Dᵥ50 of the dielectric material particles in the filtered material.

In this application, a test method for a mass proportion of the dielectric material particles in the negative electrode sheet 10 includes: drying the negative electrode sheet 10; then scraping powder to obtain a sample; and performing thermogravimetric test on the sample (after calcining, mixing a silicon-based negative electrode active material system with a sodium hydroxide solution for reaction, where the powder obtained after filtration is the sample), where test conditions are as follows: the test is performed in an oxygen atmosphere, with the sample being heated from 25°C to 1000°C at a heating rate of 5°/min, where a longitudinal coordinate in a thermogravimetric curve (thermogravimetric (TG) curve, with longitudinal coordinate as weight percentage and horizontal coordinate as temperature) corresponding to 1000°C is the mass proportion of the dielectric material particles in the negative electrode active material layer.

In some embodiments of this application, the relative dielectric constant of the dielectric material particles is 1000 to 10000, such as 1000 to 9500, 1200 to 9000, 1300 to 8500, 1500 to 8000, 1600 to 7500, 1700 to 7000, 1800 to 6500, 1900 to 6000, 2000 to 5500, 2100 to 5000, 2200 to 4500, 2300 to 4000, 2400 to 3500, 2500 to 3000, 2600 to 2900, or 2700 to 2800. Thus, adopting dielectric material particles with these relative dielectric constants in the negative electrode sheet 10 of this application can further improve the fast charging performance of the battery.

A process by which the dielectric material particles with the above relative dielectric constant exert their performance is speculated as follows: the dielectric material particles with such relative dielectric constant can exert an excellent counter electric field effect during charging and may form a thin SEI film on the surface of the negative electrode active material, shortening the migration path of active ions in the SEI film, thereby improving the fast charging performance of the battery and reducing electrolyte solution consumption. In addition, the counter electric field generated by the dielectric material particles may reduce the desolvation barrier of active ions, increasing the desolvation rate of active ions and the diffusion rate of active ions in the SEI film, thereby further improving the fast charging performance of the battery. In some other embodiments, the relative dielectric constant of the dielectric material particles is 1500 to 5000.

In this application, the relative dielectric constant of the dielectric material particles refers to a relative dielectric constant at room temperature (25°C ± 5°C), which has the meaning well known in the art and may be tested using instruments and methods known in the art. For example, first, powder may be scrapped from the negative electrode sheet 10, a sample is taken and calcined to 600°C to completely calcine a binder, the negative electrode active material, and the like (after calcining, a silicon-based negative electrode active material system is mixed with a sodium hydroxide solution for reaction), water is added for filtration and separation to obtain the dielectric material particles, and then the dielectric material particles are prepared into a circular sample (the sample preparation process includes: 40 g of the binder is added to 200 g of to-be-tested dielectric material particles (the binder is formed by compounding an acrylic acid (PAA) emulsion and an alcohol amine plasticizer, with a decomposition temperature lower than 300°C); the mixture is stirred thoroughly and uniformly, then slowly added to an automatic roll press (the roll press is a double-roller roll press, where the rollers are made of stainless steel, with surface polished; and a gap between the two rollers is adjustable within a range of 0.5 mm to 2 mm), and rolled into a raw ceramic cake with a thickness of 1 mm ± 0.15 mm, where the raw ceramic cake is qualified if there is no color difference on surface, and the cross section is uniform without obvious delamination; and then the raw ceramic cake is placed under an indenter of a punching machine (the indenter of the punching machine is circular with size of φ10 mm to φ13 mm; and the indenter is made of stainless steel, with surface polished), and punched into 10 thin circular ceramic sheets with a diameter of 11 mm ± 1 mm; (2) degumming: the thin circular ceramic sheets obtained in step (1) are placed on a clean and flat zirconia or alumina setter plate; the thin circular ceramic sheets are put into a muffle furnace together with the setter plate, and heated to 300°C at a heating rate of 0.3°C/min and maintained at the temperature for 6 h for degumming; and after front side degumming is completed, the thin circular ceramic sheets are taken out, arranged with back side up, and the above operations are repeated for back side degumming; (3) silver coating: the thin circular ceramic sheets subjected to the degumming in step (2) are placed on the clean and flat zirconia or alumina setter plate, and a fine brush is used to uniformly brush a silver slurry onto front sides of the thin circular ceramic sheets, where the silver slurry is a high-temperature calcined conductive silver slurry, and the silver slurry is brushed unidirectionally 2 to 3 times, with a thickness of 80 µm to 100 µm; (4) silver firing: first, the silver layer attached to a side of the thin circular ceramic sheet coated with silver in step (3) is gently scraped off with a blade, and then the silver-coated thin circular ceramic sheets together with the setter plate are put into a muffle furnace, and subjected to silver firing according to the following parameters: being heated to 800°C at a heating rate of 5°C/min and maintained at the temperature for 2 h; after silver firing of the front side, the thin circular ceramic sheets and setter plate are taken out; and steps (3) and (4) are repeated for silver firing of the back side). Then, an LCR tester is used to test a capacitance C and calculate it according to the formula: relative dielectric constant ε = (C × d) / (ε₀ × A). C represents a capacitance, measured in farads (F); d represents a thickness of the sample, measured in cm; A represents an area of the sample, measured in cm²; and ε₀ represents a vacuum dielectric constant, where ε₀ = 8.854 × 10⁻¹⁴ F/cm. In this application, the test conditions may be 1 kHz, 1.0 V, and 25°C ± 5°C. For test standards, reference may be made to GB/T 11297.11-2015.

In some embodiments of this application, the dielectric material particles include at least one of barium titanate, lead titanate, lithium niobate, lead zirconate titanate, lead metaniobate, or lithium barium lead niobate. Thus, such dielectric material particles can further improve the fast charging performance of the battery.

A process by which the dielectric material particles with the above composition exert their performance is speculated as follows: the dielectric material particles with the above composition can exert an excellent counter electric field effect and may reduce the desolvation barrier of active ions, increasing the desolvation rate of active ions and the diffusion rate of the active ions in the SEI film, thereby improving the fast charging performance of the battery.

In some embodiments of this application, the dielectric material particles include doping ions, and the doping ions include at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺. Thus, by being doped with the above ions, the dielectric material particles of this application can adjust the relative dielectric constant of the dielectric material particles, thereby improving the fast charging performance of the battery.

A process by which the above doped dielectric material particles exert their performance is speculated as follows: by doping the dielectric material particles with the above ions, the relative dielectric constant of the dielectric material particles can be adjusted, which may enable the dielectric material particles to exert an excellent counter electric field and reduce the desolvation barrier of active ions, increasing the desolvation rate of active ions and the diffusion rate of active ions in the SEI film, thereby improving the fast charging performance of the battery.

In an example, the dielectric material particles may include at least one of barium titanate doped with trivalent rare earth metal ions, barium titanate doped with pentavalent ions, lead titanate doped with pentavalent ions, or lead zirconate titanate doped with pentavalent ions. For example, the trivalent rare earth metal ions include at least one of Sc³⁺, Y³⁺, or Yb³⁺, and the pentavalent ions include at least one of Nb⁵⁺, W⁵⁺, or Mo⁵⁺. For example, the dielectric material particles may include BaₓTi_{y}Al_{z}O₃ (x + y + z = 1), BaₐY_{b}Ti_{c}O₃ (a + b + c = 1), PbₘTiₙNbₚO₃ (m + n + p = 1), and the like.

In some embodiments of this application, the dielectric material particles are barium titanate, and the barium titanate includes a tetragonal crystal form.

In this application, the "tetragonal crystal form" refers to a crystal structure having a unit cell including three axes, where two of the axes have the same length and are perpendicular to each other, and the third axis is perpendicular to the other two axes. The tetragonal crystal form of barium titanate can be obtained by XRD testing. FIG. 2 is an XRD pattern of barium titanate in a tetragonal crystal form, with 2θ positions of X-ray diffraction peaks at 22°, 31°, 38°, 45°, 56°, and 66°.

Thus, using barium titanate in the above tetragonal crystal form as dielectric material particles may further increase the desolvation rate of active ions and the diffusion rate of active ions in the SEI film and further reduce a thickness of the SEI film, thereby improving the cycling performance and fast charging performance of secondary batteries.

In some embodiments of this application, a BET specific surface area of the dielectric material particles is 0.8 m²/g to 7 m²/g, such as 0.9 m²/g to 6.5 m²/g, 1 m²/g to 6 m²/g, 1.5 m²/g to 5.5 m²/g, 1.8 m²/g to 5 m²/g, or 0.8 m²/g to 7 m²/g.

Thus, the dielectric material particles within the above specific surface area range are more closely combined with the negative electrode active material, which is conducive to exertion of the performance of the dielectric material particles, and may further improve the desolvation effect of active ions and reduce the thickness of the SEI film, thereby further improving the cycling performance and fast charging performance of the battery. In some other embodiments of this application, the BET specific surface area of the dielectric material particles is 1.8 m²/g to 2 m²/g.

In this application, the BET specific surface area of the dielectric material particles has the meaning well known in the art and may be tested using instruments and methods known in the art. For example, first powder is scraped from the negative electrode sheet, a sample is taken and calcined to 600°C to completely calcine a binder, the negative electrode active material, and the like (after calcining, a silicon-based negative electrode active material system is mixed with a sodium hydroxide solution for reaction), and water is added for filtration. Then, with reference to GB/T 19587-2017, the filtered sample is tested using a nitrogen adsorption specific surface area analysis test method, and a BET (Brunauer Emmett Teller) method is used for calculation to obtain the BET specific surface area. The nitrogen adsorption specific surface area analysis test may be performed using a Tri-Star 3020 specific surface area and pore size analyzer from Micromeritics, USA.

In an example, the negative electrode current collector 100 has two opposite surfaces in its thickness direction, and the negative electrode active material layer 200 is disposed on either or both of the two opposite surfaces of the negative electrode current collector 100.

In some embodiments of this application, a metal foil or a composite current collector may be used as the negative electrode current collector 100. For example, copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments of this application, the negative electrode active material layer 200 includes a negative electrode active material, a volume-based mean particle size Dᵥ50 of the negative electrode active material being D₂, and D₁ ≤ D₂. In some other embodiments of this application, the negative electrode active material layer 200 includes a negative electrode active material, a volume-based mean particle size Dᵥ50 of the negative electrode active material being D₂, and D₁ < D₂.

Thus, the negative electrode active material and the dielectric material particles satisfy the above particle size conditions, which may not only fully exert the effect of the dielectric material particles in reducing the desolvation barrier, to increase the desolvation rate of active ions and the diffusion rate of active ions in the SEI film so as to improve the fast charging performance of the battery, but also enable the negative electrode active material layer 200 to have a high compacted density, thereby increasing the energy density of the battery.

In some embodiments of this application, the volume-based mean particle size Dᵥ50 of the negative electrode active material is D₂, where D₂ is 2 µm to 20 µm, such as 5 µm to 18 µm, 8 µm to 15 µm, or 10 µm to 12 µm.

Thus, the combination of the negative electrode active material with the above particle sizes and the dielectric material particles may not only fully exert the effect of the dielectric material particles in reducing the desolvation barrier, to increase the desolvation rate of active ions and the diffusion rate of active ions in the SEI film so as to improve the fast charging performance of the battery; but also enable the negative electrode active material layer 200 to have a high compacted density, thereby increasing the energy density of the battery. In some other embodiments of this application, the volume-based mean particle size Dᵥ50 of the negative electrode active material is D₂, where D₂ is 8 µm to 13 µm.

In this application, a test method for the volume-based mean particle size Dᵥ50 of the negative electrode active material in the negative electrode sheet includes: ablating a surface of the negative electrode sheet with a flame to remove a binder in a surface negative electrode active material layer (with a flame temperature being 300°C to 500°C, and a moving speed of the negative electrode sheet being 1 m/min to 30 m/min); then scraping powder from the surface layer; sieving the obtained powder; separating the negative electrode active material from the dielectric material and a conductive agent, to obtain particles with a large particle size as the negative electrode active material; and then, with reference to the standard GB/T 19077-2016, using a laser particle size analyzer (for example, Malvern Master Size 3000) to test the negative electrode active material to obtain the volume-based mean particle size Dᵥ50 of the first negative electrode active material.

In some embodiments of this application, referring to FIG. 3, the negative electrode active material layer 200 may include a first negative electrode active material layer 21 and a second negative electrode active material layer 22. The first negative electrode active material layer 21 is disposed on at least one side of the negative electrode current collector 100. The second negative electrode active material layer 22 is disposed on a side of the first negative electrode active material layer 21 away from the negative electrode current collector 100. The first negative electrode active material layer 21 and/or the second negative electrode active material layer 22 includes the dielectric material particles.

In this application, "the dielectric material particles" may be dispersed in the first negative electrode active material layer 21 or the second negative electrode active material layer 22 or dispersed in both the first negative electrode active material layer 21 and the second negative electrode active material layer 22; in addition, the content of the dielectric material particles in each of the first negative electrode active material layer 21 and the second negative electrode active material layer 22 is not limited, as long as the proportion of the dielectric material particles is 0.1% to 10% based on the total mass of the negative electrode active material layer.

In some embodiments of this application, at least a portion of a surface of the negative electrode active material is provided with a coating layer, and the coating layer includes the dielectric material particles.

Thus, the dielectric material particles may be in close contact with the negative electrode active material, which may help the dielectric material particles to exert their counter electric field effect during charging to form a thin SEI film on the surface of the negative electrode sheet, reducing loss of active ions and the impedance of the SEI film, and shortening a migration path of active ions in the SEI film, thereby improving the fast charging performance of the battery and reducing electrolyte solution consumption. In addition, the desolvation barrier of active ions may be reduced, increasing the desolvation rate of active ions and the diffusion rate of active ions in the SEI film, thereby further improving the fast charging performance of the battery.

In some embodiments of this application, the negative electrode active material may employ a negative electrode active material well known in the art for batteries. In an example, the negative electrode active material may include at least one of the following materials: artificial graphite, natural graphite, soft carbon, hard carbon, a silicon-based material, a tin-based material, titanate, and the like. The silicon-based material may include at least one of elemental silicon, silicon oxide, a silicon-carbon composite material, a silicon-nitrogen composite material, or silicon alloy. The tin-based material may include at least one of elemental tin, tin oxide, or tin alloy. When the battery is a lithium-ion battery, lithium titanate is used as the titanate; and when the battery is a sodium-ion battery, sodium titanate is used as the titanate. However, this application is not limited to these materials, and other conventional materials that can be used as negative electrode active materials for batteries may also be used. These negative electrode active materials may be used alone, or two or more of them are used in combination.

In some embodiments of this application, the negative electrode active material layer 200 further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of this application, the negative electrode active material layer 200 further optionally includes a conductive agent. The conductive agent may include at least one of superconducting carbon, acetylene black, carbon black, Ketjen black, carbon dots, carbon nanotubes, graphene, or carbon nanofiber.

In some embodiments of this application, the negative electrode active material layer 200 further optionally includes other auxiliary agents, such as a thickener (for example, sodium carboxymethyl cellulose (CMC-Na)).

According to another aspect, this application proposes a negative electrode active material. At least a portion of a surface of the negative electrode active material is provided with a coating layer. The coating layer includes dielectric material particles, and a volume-based mean particle size Dᵥ50 of the dielectric material particles is D₁, where D₁ is 400 nm to 2000 nm, such as 400 nm to 1900 nm, 400 nm to 1800 nm, 500 nm to 1700 nm, 600 nm to 1600 nm, 700 nm to 1500 nm, 800 nm to 1400 nm, 900 nm to 1300 nm, 1000 nm to 1200 nm, or 1000 nm to 1100 nm.

Thus, the dielectric material particles may be in close contact with the negative electrode active material, which may help the dielectric material particles to exert their counter electric field effect during charging to form a thin SEI film on the surface of the negative electrode sheet, reducing loss of active ions and the impedance of the SEI film, and shortening a migration path of active ions in the SEI film, thereby improving the fast charging performance of the battery and reducing electrolyte solution consumption. In addition, the counter electric field generated by the dielectric material particles on the surface of the negative electrode sheet exhibits negative electricity, so that active ions accumulated on the surface of the negative electrode sheet may be attracted and uniformly distributed, thereby reducing the risk of formation of dendrites due to accumulation of active ions on a local surface of the negative electrode sheet. Moreover, the counter electric field generated by the above dielectric material particles may reduce the desolvation barrier of active ions, increasing the desolvation rate of active ions and the diffusion rate of active ions in the SEI film, thereby further improving the fast charging performance of the battery. In some other embodiments of this application, the volume-based mean particle size Dᵥ50 of the dielectric material particles is 600 nm to 1000 nm.

It should be noted that the relative dielectric constant, composition, and content of the dielectric material particles in the negative electrode sheet are the same as described above, and details are not repeated here.

According to a second aspect of this application, this application proposes a preparation method of a negative electrode sheet, including: forming a negative electrode active material layer on at least one side of a negative electrode current collector. The negative electrode active material layer includes dielectric material particles. A volume-based mean particle size Dᵥ50 of the dielectric material particles is D₁, and D₁ is 400 nm to 2000 nm. Based on a total mass of the negative electrode active material layer, a proportion of the dielectric material particles is 0.1% to 10%.

Thus, in this application, adding dielectric material particles with the above particle size and content to the negative electrode sheet 10 can improve the fast charging performance of a battery. It may be because the dielectric material particles with the particle size provided in this application are added to the negative electrode sheet 10, and due to a large particle size of the dielectric material particles, the dielectric material particles are not prone to agglomeration, and no additional dispersants are required, so that the performance of the dielectric material particles can be fully exerted. In addition, the combination with the above content can improve the fast charging performance of the battery.

A process by which the above dielectric material particles exert their performance is speculated as follows: during charging of a battery including the negative electrode sheet 10 of this application, when the dielectric material particles are under the action of an electric field, centers of positive and negative charges in the material are separated, generating a counter electric field inside. Under the action of this counter electric field, a concentration of electrons on a surface of the negative electrode active material may decrease. Since a SEI film (solid electrolyte interphase film) formed on the surface of the negative electrode active material is formed by reduction of an electrolyte solution solvent at the negative electrode active material after the electrolyte solution solvent gains electrons, the decrease in concentration of the electrons on the surface of the negative electrode active material results in formation of a thin SEI film at a three-phase interface of the dielectric material particles, the negative electrode active material, and the electrolyte solvent, reducing loss of active ions and the impedance of the SEI film, and shortening a migration path of the active ions in the SEI film, thereby improving the fast charging performance of the battery and reducing electrolyte solution consumption. In addition, the counter electric field generated by the dielectric material particles on the surface of the negative electrode active material exhibits negative electricity, so that active ions accumulated on the surface of the negative electrode active material may be attracted and uniformly distributed, reducing the risk of formation of dendrites due to accumulation of active ions on a local surface of the negative electrode sheet. Moreover, the counter electric field generated by the dielectric material particles may reduce the desolvation barrier of active ions, increasing the desolvation rate of active ions and the diffusion rate of active ions in the SEI film, thereby further improving the fast charging performance of the battery.

In some embodiments of this application, the negative electrode sheet may be prepared by the following method: dispersing the above components used for preparing the negative electrode sheet, such as the negative electrode active material, dielectric material particles, conductive agent, binder, and any other components, in a solvent (such as deionized water) to form a negative electrode slurry; then applying the negative electrode slurry onto a negative electrode current collector, followed by processes such as drying and cold pressing, to obtain the negative electrode sheet.

According to a third aspect of this application, this application proposes a battery, including the negative electrode sheet according to the first aspect of this application or a negative electrode sheet obtained by the method according to the second aspect of this application. Thus, the battery has excellent fast charging performance and cycling performance.

In some embodiments of this application, the battery includes a lithium-ion battery or a sodium-ion battery. The battery of this application includes a battery cell form, a battery module form, and a battery pack form.

Generally, a battery includes a positive electrode sheet, a negative electrode sheet, an electrolyte, and a separator. During charging and discharging of the battery, active ions are intercalated and deintercalated back and forth between a positive electrode sheet and a negative electrode sheet. The electrolyte plays a role in conducting ions between the positive electrode sheet and the negative electrode sheet. The separator is disposed between the positive electrode sheet and the negative electrode sheet, mainly serving to prevent short circuits between positive and negative electrodes, as well as to allow ions to pass through.

In some embodiments of this application, the positive electrode sheet includes a positive electrode current collector and a positive electrode active material layer, the positive electrode active material layer is disposed on at least one side of the positive electrode current collector, and the positive electrode active material layer includes the positive electrode active material.

In an example, the positive electrode current collector has two opposite surfaces along its thickness direction, and the positive electrode active material layer is disposed on either or both of the two opposite surfaces of the positive electrode current collector.

In some embodiments of this application, a metal foil or a composite current collector may be used as the positive electrode current collector. For example, aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments of this application, the positive electrode active material layer may further include a positive electrode active material, and the positive electrode active material may adopt a positive electrode active material well known in the art for batteries.

In an example, when the positive electrode sheet is used in a lithium-ion battery, the positive electrode active material may adopt a positive electrode active material for lithium-ion batteries well known in the art. In an example, the positive electrode active material may include at least one of the following materials: lithium-containing phosphates with olivine structure, lithium transition metal oxides, and their respective modified compounds. However, this application is not limited to these materials, and other conventional materials that can be used as positive electrode active materials for batteries may also be used. These positive electrode active materials may be used alone, or two or more of them are used in combination. Examples of the lithium transition metal oxides may include but are not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.8}Co_{0.15}Al_{0.05}O₂), their modified compounds, and the like. Examples of the lithium-containing phosphates with olivine structure may include but are not limited to at least one of lithium iron phosphate (such as LiFePO₄ (also abbreviated as LFP)), a lithium iron phosphate and carbon composite material, lithium manganese phosphate (such as LiMnPO₄), a lithium manganese phosphate and carbon composite material, lithium manganese iron phosphate, or a lithium manganese iron phosphate and carbon composite material.

In an example, when the positive electrode sheet is used in a sodium-ion battery, the positive electrode active material may adopt a positive electrode active material for sodium-ion batteries well known in the art. In an example, the positive electrode active material may include at least one of a layered transition metal oxide, a polyanion compound, and a Prussian blue analog, but is not limited thereto.

As examples of the above layered transition metal oxide, for example, the following may be listed:
Na₁₋ₓCuₕFeₖMnₗM¹ₘO_{2-y}, where M¹ includes at least one of Li, Be, B, Mg, Al, K, Ca, Ti, Co, Ni, Zn, Ga, Sr, Y, Nb, Mo, In, Sn, or Ba, 0 < x ≤ 0.33, 0 < h ≤ 0.24, 0 ≤ k ≤ 0.32, 0 < 1 ≤ 0.68, 0 ≤ m < 0.1, h + k + l + m = 1, and 0 ≤ y < 0.2;
Na_{0.67}Mn_{0.7}Ni_{z}M²_{0.3-z}O₂, where M² includes at least one of Li, Mg, Al, Ca, Ti, Fe, Cu, Zn, or Ba, and 0 < z ≤ 0.1; and
NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1.

As examples of the above polyanion compound, for example, the following may be listed:
A¹_{f}M³_{g}(PO₄)ᵢOⱼX¹₃₋ⱼ, where A¹ includes at least one of H, Li, Na, K, or NH₄, M³ includes at least one of Ti, Cr, Mn, Fe, Co, Ni, V, Cu, or Zn, X¹ is at least one of F, Cl, or Br, 0 < f ≤ 4, 0 < g ≤ 2, 1 ≤ i ≤ 3, and 0 ≤ j ≤ 2;
NaₙM⁴PO₄X², where M⁴ includes at least one of Mn, Fe, Co, Ni, Cu, or Zn, X² is at least one of F, Cl, or Br, and 0 < n ≤ 2;
NaₚM⁵_{q}(SO₄)₃, where M⁵ includes at least one of Mn, Fe, Co, Ni, Cu, or Zn, 0 < p ≤ 2, and 0 < q ≤ 2; and
NaₛMnₜFe₃₋ₜ(PO₄)₂(P₂O₇), where 0 < s ≤ 4, and 0 ≤ t ≤ 3, for example, t is 0, 1, 1.5, 2, or 3.

As examples of the above Prussian blue analog, for example, the following may be listed:
AᵤM⁶ᵥ[M⁷(CN)₆]_{w}·xH₂O, where A includes at least one of H⁺, NH₄⁺, alkali metal cations, or alkaline earth metal cations, M⁶ and M⁷ each independently include at least one of transition metal cations, 0 < u ≤ 2, 0 < v ≤ 1, 0 < w ≤ 1, and 0 < x < 6. For example, A includes at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺, and M⁶ and M⁷ each independently include at least cations of Ti, V, Cr, Mn, Fe, Co, Ni, Cu, Zn, Sn, or W.

Charging and discharging of a battery are accompanied with intercalation, deintercalation and consumption of Li or Na, and a molar content of Li or Na varies when the battery is discharged to different states. In the enumeration of the positive electrode active material in this application, the molar content of Li or Na is based on an initial state of the material, that is, a state before feeding, and when the positive electrode active material is used in a battery system, the molar content of Li or Na changes after charge-discharge cycles.

In the enumeration of the positive electrode active material in this application, a molar content of oxygen is only a theoretical state value, and lattice oxygen release causes changes in molar content of oxygen, resulting in fluctuations in actual molar content of oxygen.

In some embodiments of this application, the positive electrode active material layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some embodiments of this application, based on a total mass of the active material layer, a mass proportion of the binder is 0.5% to 3%, such as 0.5%, 1%, 1.5%, 2%, 2.5%, or 3%.

In some embodiments of this application, the positive electrode active material layer further optionally includes a conductive agent. In an example, the conductive agent may include at least one of superconducting carbon, acetylene black, carbon black, Ketjen black, carbon dots, carbon nanotubes, graphene, or carbon nanofiber.

In some embodiments of this application, based on the total mass of the positive electrode active material layer, a mass proportion of the conductive agent is 0.8% to 4%, such as 0.8%, 1%, 1.5%, 2%, 2.5%, 3%, 3.5%, or 4%.

In some embodiments of this application, the positive electrode sheet may be prepared in the following manner: the above components for preparing the positive electrode sheet, such as the positive electrode active material, the conductive agent, the binder, and any other components, are dispersed in a solvent (such as N-methylpyrrolidone) to form a positive electrode slurry; and the positive electrode slurry is applied onto the positive electrode current collector, followed by processes such as drying and cold pressing, to obtain a positive electrode sheet.

This application imposes no specific limitation on the type of the electrolyte, which may be selected according to needs. For example, the electrolyte may be in a liquid state, a gel state, or an all-solid-state.

In some embodiments of this application, an electrolyte solution is used as the electrolyte. The electrolyte solution includes an electrolytic salt and a solvent.

In some embodiments of this application, when the battery is a lithium-ion battery, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments of this application, when the battery is a sodium-ion battery, the electrolytic salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethanesulfonyl)imide.

In some embodiments of this application, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, dimethoxyethane, methyl ethyl sulfone, or diethyl sulfone.

In some embodiments of this application, the electrolyte solution further optionally includes an additive. For example, the additive may include a negative electrode film-forming additive and a positive electrode film-forming additive, and may further include additives that can improve some performance of the battery, such as additives that improve the overcharge performance of the battery, additives that improve the high-temperature or low-temperature performance of the battery, and the like.

This application imposes no particular limitation on the type of the separator, and any well-known porous separator with good chemical stability and mechanical stability can be selected.

In some embodiments, a material of the separator may include at least one of glass fiber, non-woven fabric, polyethylene, polypropylene, or polyvinylidene fluoride. The separator may be a single-layer film or a multi-layer composite film, without particular limitation. When the separator is a multi-layer composite film, the materials of the layers may be the same or different, without particular limitation.

In some embodiments, the positive electrode sheet, the negative electrode sheet, and the separator may be made into an electrode assembly through a winding process or a stacking process.

In some embodiments, the battery cell may include an outer package. The outer package may be configured to encapsulate the above electrode assembly and electrolyte.

In some embodiments, the outer package of the battery cell may be a hard shell, such as a hard plastic shell, aluminum shell, or steel shell. The outer package of the battery cell may alternatively be a soft package, such as a pouch-type soft package. The material of the soft package may be plastic, and examples of the plastic include polypropylene, polybutylene terephthalate, polybutylene succinate, and the like.

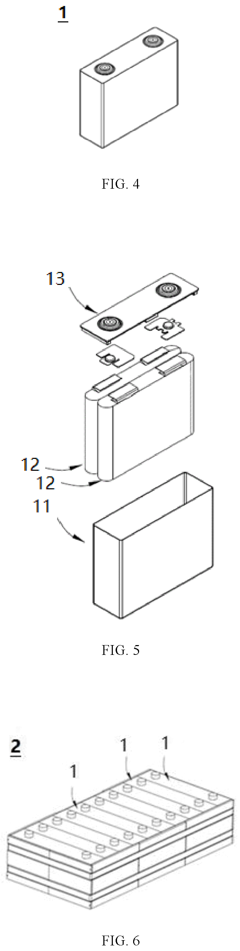

This application imposes no particular limitation on the shape of the battery cell, which may be a cylindrical shape, a prismatic shape, or any other shapes. For example, FIG. 4 shows a battery cell 1 of a prismatic structure as an example.

In some embodiments, referring to FIG. 5, the outer package may include a shell 11 and a cover plate 13. The shell 11 may include a bottom plate and side plates connected to the bottom plate, and the bottom plate and the side plates enclose an accommodating cavity. The shell 11 has an opening in communication with the accommodating cavity, and the cover plate 13 can cover the opening to close the accommodating cavity. The positive electrode sheet, the negative electrode sheet, and the separator may form an electrode assembly 12 through a winding process or a stacking process. The electrode assembly 12 is encapsulated in the accommodating cavity. The electrolyte solution infiltrates into the electrode assembly 12. There may be one or more electrode assemblies 12 in the battery cell 1, and those skilled in the art can select according to specific actual needs.

In some embodiments, battery cells may be assembled into a battery module, there may be one or more battery cells in the battery module, and the specific number may be selected by those skilled in the art according to the application and capacity of the battery module.

FIG. 6 shows a battery module 2 as an example. Referring to FIG. 6, in the battery module 2, a plurality of battery cells 1 may be arranged in sequence along a length direction of the battery module 2. Certainly, they may alternatively be arranged in any other manner. Further, the plurality of battery cells 1 may be fixed by fasteners.

Optionally, the battery module 2 may further include a housing having an accommodating space, and the plurality of battery cells 1 are accommodated in the accommodating space.

In some embodiments, the above battery module may be assembled into a battery pack, and there may be one or more battery modules in the battery pack, and the specific number may be selected by those skilled in the art according to the application and capacity of the battery pack.

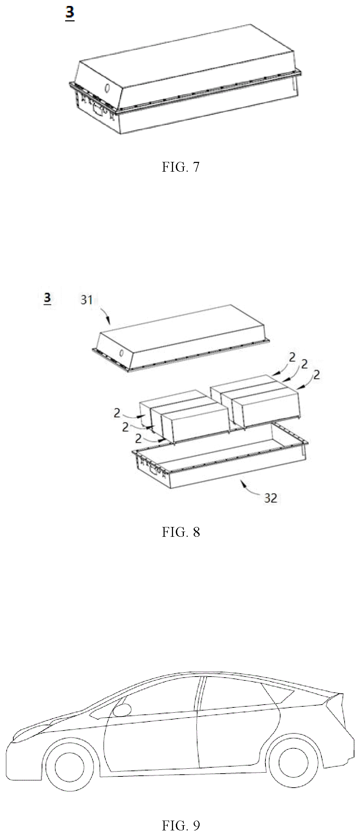

FIG. 7 and FIG. 8 show a battery pack 3 as an example. Referring to FIG. 7 and FIG. 8, the battery pack 3 may include a battery box and a plurality of battery modules 2 disposed in the battery box. The battery box includes an upper box body 31 and a lower box body 32, where the upper box body 31 may cover the lower box body 32 to form a closed space for accommodating the battery modules 2. The plurality of battery modules 2 may be arranged in the battery box in any manner.

In addition, this application further provides an electric apparatus, where the electric apparatus includes the battery provided by this application. The battery cell, battery module, or battery pack may be used as a power source of the electric apparatus or as an energy storage unit of the electric apparatus. The electric apparatus may include mobile devices (such as mobile phones and notebook computers), electric vehicles (such as battery electric vehicles, hybrid electric vehicles, plug-in hybrid electric vehicles, electric bicycles, electric scooters, electric golf carts, and electric trucks), electric trains, ships and satellites, energy storage systems, and the like, but is not limited thereto.

For the electric apparatus, a battery cell, battery module, or battery pack may be selected according to the use needs of the electric apparatus.

FIG. 9 shows an electric apparatus as an example. The electric apparatus is a battery electric vehicle, hybrid electric vehicle, plug-in hybrid electric vehicle, or the like. To meet the high power and high energy density requirements of the electric apparatus on batteries, a battery pack or battery module may be used.

In another example, the apparatus may be a mobile phone, tablet computer, notebook computer, or the like. Such apparatus is usually required to be light and thin, and can use a battery cell as a power source.

The following describes examples of this application. The examples described below are exemplary and are only used to explain this application, and should not be construed as limiting this application. For specific techniques or conditions not specified in the examples, they are carried out according to the techniques or conditions described in the literature in the art or according to the product instructions. Reagents or instruments used without specifying the manufacturer are all conventional products that are commercially available

### Example 1

### 1. Preparation of positive electrode sheet

A positive electrode active material lithium nickel cobalt manganese oxide (NCM523, that is, LiNi_{0.5}Co_{0.2}Mn_{0.3}O₂), a binder polyvinylidene fluoride PVDF, and a conductive agent acetylene black (Super P) were mixed at a weight ratio of 98:1:1, and added with N-methylpyrrolidone (NMP) as a solvent, and the slurry was stirred uniformly under vacuum to obtain a positive electrode slurry. Then, the obtained positive electrode slurry was applied onto two side surfaces of a 13 µm aluminum foil with a scraper blade at an areal density of 13.7 mg/cm², and then the aluminum foil was dried at 140°C, cold pressed, and slit to obtain a positive electrode sheet.

### 2. Preparation of negative electrode sheet

A negative electrode active material artificial graphite secondary particles, a conductive agent acetylene black, a composite binder SBR (styrene-butadiene rubber), a dispersant sodium carboxymethyl cellulose (CMC-Na), and dielectric material particles barium titanate were dissolved in deionized water as a solvent at a weight ratio of 96:1:1:1:1, and stirred and mixed uniformly to prepare a negative electrode slurry. The negative electrode slurry was uniformly applied onto two side surfaces of a 7 µm negative electrode current collector copper foil, followed by drying, cold pressing, and slitting, to obtain a negative electrode sheet (a thickness of a negative electrode active material layer on each side was 120 µm).

### 3. Preparation of electrolyte solution

In an argon atmosphere glove box (H₂O < 0.1 ppm, and O₂ < 0.1 ppm), organic solvents ethylene carbonate (EC) and methyl ethyl carbonate (EMC) were mixed uniformly at a volume ratio of 3:7 to obtain an organic solvent, and LiPF₆ was dissolved in this solvent and stirred uniformly, to obtain an electrolyte solution with a concentration of 1 mol/L.

### 4. Separator

A commercially available PP-PE copolymer microporous film with a thickness of 20 µm and an average pore size of 80 nm (from Zhuogao Electronic Technology Co., Ltd., model 20) was used.

### 5. Preparation of secondary battery

The positive electrode sheet, separator, and negative electrode sheet were stacked in sequence, with the separator located between positive and negative electrodes for isolation, and wound to obtain a bare cell. The bare cell was placed in an outer package, and the above electrolyte solution was injected, followed by sealing, to obtain a lithium-ion battery.

The preparation methods of the lithium-ion batteries of Examples 2 to 18 and Comparative Examples 1 to 4 were the same as that of Example 1, except that the process of preparing the negative electrode sheet was different, specifically as shown in Table 1.

**Table 1**

| | Negative electrode active material layer | | | | | |
|---|---|---|---|---|---|---|
| | Dielectric material particles | | | | Mass ratio of negative electrode active material, conductive agent, binder, dispersant, and dielectric material particles | Dᵥ50 of negative electrode active material (µm) |
| | Composition | Dᵥ50 (nm) | Relative dielectric constant | Mass proportion in negative electrode active material layer (%) | | |
| Example 1 | Barium titanate (tetragonal crystal form) | 403 | 1821 | 1 | 96:1:1:1:1 | 10.2 |
| Example 2 | Barium titanate (tetragonal crystal form) | 602 | 2023 | 1 | 96:1:1:1:1 | 10.2 |
| Example 3 | Barium titanate (tetragonal crystal form) | 820 | 2213 | 1 | 96:1:1:1:1 | 10.2 |
| Example 4 | Barium titanate (tetragonal crystal form) | 982 | 2632 | 1 | 96:1:1:1:1 | 10.2 |
| Example 5 | Barium titanate (tetragonal crystal form) | 1513 | 3023 | 1 | 96:1:1:1:1 | 10.2 |
| Example 6 | Barium titanate (tetragonal crystal form) | 1984 | 4515 | 1 | 96:1:1:1:1 | 10.2 |
| Example 7 | Barium titanate (tetragonal crystal form) | 820 | 2213 | 1 | 96:1:1:1:1 | 2.1 |
| Example 8 | Barium titanate (tetragonal crystal form) | 820 | 2213 | 1 | 96:1:1:1:1 | 8.3 |
| Example 9 | Barium titanate (tetragonal crystal form) | 820 | 2213 | 1 | 96:1:1:1:1 | 12.8 |
| Example 10 | Barium titanate (tetragonal crystal form) | 820 | 2213 | 1 | 96:1:1:1:1 | 19.8 |
| Example 11 | Barium titanate (tetragonal crystal form) | 820 | 2213 | 0.1 | 96.9:1:1:1:0.1 | 10.2 |
| Example 12 | Barium titanate (tetragonal crystal form) | 820 | 2213 | 0.8 | 96.2:1:1:1:0.8 | 10.2 |
| Example 13 | Barium titanate (tetragonal crystal form) | 820 | 2213 | 1.2 | 95.8:1:1:1:1.2 | 10.2 |
| Example 14 | Barium titanate (tetragonal crystal form) | 820 | 2213 | 2 | 95:1:1:1:2 | 10.2 |
| Example 15 | Barium titanate (tetragonal crystal form) | 820 | 2213 | 3 | 94:1:1:1:3 | 10.2 |
| Example 16 | Barium titanate (tetragonal crystal form) | 820 | 2213 | 10 | 87:1:1:1:10 | 10.2 |
| Example 17 | Lithium niobate | 820 | 2005 | 1 | 96:1:1:1:1 | 10.2 |
| Example 18 | Lead titanate | 820 | 2102 | 1 | 96:1:1:1:1 | 10.2 |
| Comparative Example 1 | Barium titanate (hexagonal crystal form) | 112 | 823 | 1 | 96:1:1:1:1 | 10.2 |
| Comparative Example 2 | Barium titanate (tetragonal crystal form) | 2530 | 4801 | 1 | 96:1:1:1:1 | 10.2 |
| Comparative Example 3 | Barium titanate (tetragonal crystal form) | 820 | 2213 | 12 | 85:1:1:1:12 | 10.2 |
| Comparative Example 4 | / | / | / | / | 97:1:1:1:0 | 10.2 |

The lithium precipitation situation, first-cycle Coulombic efficiency, fast charging performance, and cycling performance of the batteries in Example 1 to 18 and Comparative Examples 1 to 4 were characterized, and the characterization results are shown in Table 3.

### (1) Test for lithium precipitation situation on negative electrode sheet:

The battery was charged to 4.4 V at 4C, left standing for 5 min, then discharged to 2.8 V at 1C, and left standing for 5 min. This charge-discharge process was cycled 500 times. Then, the negative electrode sheet was disassembled; a surface of the disassembled negative electrode sheet was scanned under vacuum using electron back-scattered diffraction (EBSD) (where a scanning angle of a scanning electron microscope (Scanning Electron Microscopy, SEM) used was 70 degrees); and a lithium precipitation area signal and a non-lithium precipitation area signal were collected separately, where lithium precipitation area proportion = intensity of lithium precipitation area signal / (intensity of lithium precipitation area signal + intensity of non-lithium precipitation area signal).

### (2) First-cycle coulombic efficiency test:

A secondary battery before formation was first charged to 3.4 V at 25°C and 0.02C, charged to 3.8 V at 0.1C, charged at a constant current of 0.5C to 4.4 V, charged at a constant voltage of 4.4 V to 0.05C, left standing for 10 min, and discharged at a constant current of 0.5C to a cut-off voltage of 2.8 V (each group included five batteries). After a first-cycle charge capacity and a first-cycle discharge capacity of the secondary battery were obtained, the first-cycle Coulombic efficiency of the secondary battery was calculated according to the following formula. 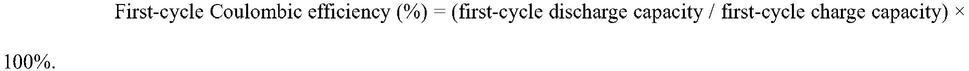 First-cycle Coulombic efficiency (%) = (first-cycle discharge capacity / first-cycle charge capacity) × 100%.

### (3) Fast charging performance test:

At 25°C, the battery was charged at a constant current of 4C to a cut-off charge voltage of 4.4 V, then charged at a constant voltage until the current was 0.05C, left standing for 5 min, and then discharged at a constant current of 0.33C to a cut-off discharge voltage of 2.8 V; and an actual capacity was recorded as C₀.

Then, the battery was successively charged at constant currents of 0.5C₀, 1C₀, 1.5C₀, 2C₀, 2.5C₀, 3C₀, 3.5C₀, 4C₀, and 4.5C₀ to a cut-off charge voltage of 4.4 V for a full battery or a negative electrode cut-off potential of 0 V (whichever was reached first). After each time of charging, the battery needed to be discharged at 1C₀ to a cut-off discharge voltage of 2.8 V for a full battery. Corresponding negative electrode potentials obtained when the battery was charged to 10% SOC, 20% SOC, 30% SOC, ..., and 80% SOC (State of Charge, State of Charge) at different charge rates were recorded. A rate-negative electrode potential curve at different SOC states was plotted, and after linear fitting, charge rates corresponding to different SOC states when the negative electrode potential was 0 V were obtained. These charge rates were charge windows at those SOC states, and were recorded as C10% SOC, C20% SOC, C30% SOC, C40% SOC, C50% SOC, C60% SOC, C70% SOC, and C80% SOC, respectively. A charging time T for the battery to be charged from 10% SOC to 80% SOC was calculated according to the formula (60/C20% SOC + 60/C30% SOC + 60/C40% SOC + 60/C50% SOC + 60/C60% SOC + 60/C70% SOC + 60/C80% SOC) × 10%. A shorter charging time T indicates better fast charging performance of the secondary battery.

### (4) Cycling performance test:

At 25°C, the battery was charged at a constant current at a rate of 4C to a cutoff voltage of 4 V and then discharged at a rate of 1C to a cutoff voltage of 2.8 V; an initial capacity was recorded as C₀; then, the battery was charged according to the strategy shown in Table 2, and discharged at 1C; a discharge capacity Cₙ for each cycle was recorded; and the number of cycles was recorded when a capacity retention rate of the battery (capacity retention rate = Cₙ / C₀ × 100%) reached 80%. A larger number of cycles indicates better cycling performance of the secondary battery.

**Table 2**

| State of charge SOC of secondary battery | Charge rate (C) |
|---|---|
| 0 to 3% | 2 |
| 3% to 20% | 5.2 |
| 20% to 30% | 4.5 |
| 30% to 40% | 4.2 |
| 40% to 50% | 3.3 |
| 50% to 60% | 2.6 |
| 60% to 70% | 2.0 |
| 70% to 80% | 1.5 |
| 80% to 97% | 0.33 |

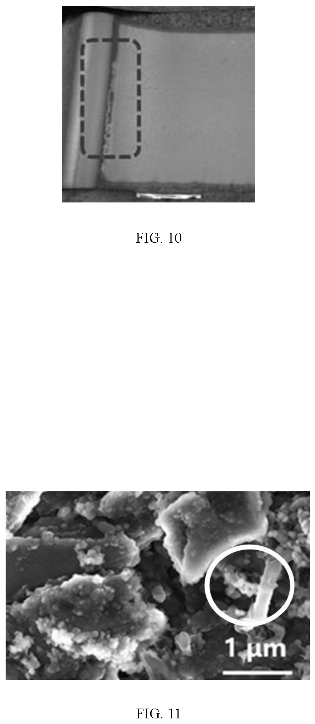

FIG. 10 is a photograph of a negative electrode sheet disassembled from the battery obtained in Comparative Example 4 after cycling (cycling was performed for 300 times according to the cycling conditions of the above cycling performance test). From the figure, it can be seen that there are obvious lithium dendrites on the surface of the negative electrode sheet disassembled from the battery obtained in Comparative Example 4 after cycling. FIG. 11 is a SEM image (scanning electron microscope image) of dendrites on the negative electrode sheet disassembled from the battery obtained in Comparative Example 1 after cycling. Referring to FIG. 11, there are obvious lithium dendrites (the rod-shaped structures circled in the figure are lithium dendrites) on the surface of the negative electrode active material in the negative electrode sheet disassembled from the battery obtained in Comparative Example 1 after cycling. This indicates that in Comparative Example 4, without the addition of the above dielectric material particles, the negative electrode sheet has the risk of generating lithium dendrites.

**Table 3**

| | Battery performance | | | |
|---|---|---|---|---|
| | Lithium precipitation area proportion of negative electrode sheet (%) | First-cycle Coulombic efficiency (%) | Charging time (min) | Cycling performance (cycles) |
| Example 1 | 10 | 88 | 16.5 | 2462 |
| Example 2 | 5 | 89 | 16 | 2473 |
| Example 3 | 1 | 90 | 15 | 2505 |
| Example 4 | 10 | 89 | 16 | 2402 |
| Example 5 | 15 | 88 | 16.5 | 2350 |
| Example 6 | 17 | 88 | 16.7 | 2341 |
| Example 7 | 18 | 88 | 16.8 | 2338 |
| Example 8 | 3 | 89 | 15.7 | 2473 |
| Example 9 | 1.5 | 90 | 15.2 | 2492 |
| Example 10 | 11 | 89 | 16.2 | 2363 |
| Example 11 | 15 | 88 | 16.5 | 2402 |
| Example 12 | 5 | 89 | 15.8 | 2466 |
| Example 13 | 0.7 | 90 | 14 | 2532 |
| Example 14 | 0 | 92 | 13.8 | 2604 |
| Example 15 | 0 | 93 | 13.5 | 2654 |
| Example 16 | 6 | 88.6 | 15.8 | 2408 |
| Example 17 | 1.5 | 89.5 | 15.3 | 2483 |
| Example 18 | 1 | 90 | 15.2 | 2490 |
| Comparative Example 1 | 50 | 83 | 19 | 1903 |
| Comparative Example 2 | 30 | 85 | 18.8 | 1952 |
| Comparative Example 3 | 35 | 85 | 18 | 2103 |
| Comparative Example 4 | 60 | 87 | 21 | 1801 |

In conclusion: as compared with Comparative Examples 1 to 4, the volume-based mean particle size Dᵥ50 of the dielectric material particles in the active material layer of the negative electrode sheet of each of the batteries in Examples 1 to 18 is 400 nm to 2000 nm, and based on the total mass of the negative electrode active material layer, the proportion of the dielectric material particles is 0.1% to 10%. The volume-based mean particle size Dᵥ50 of the dielectric material in the active material layer of the negative electrode sheet of the battery in Comparative Example 1 is 112 nm, and the mass proportion in the negative electrode active material layer is 1%; the volume-based mean particle size Dᵥ50 of the dielectric material in the active material layer of the negative electrode sheet of the battery in Comparative Example 2 is 2530 nm, and the mass proportion in the negative electrode active material layer is 1%; the volume-based mean particle size Dᵥ50 of the dielectric material in the active material layer of the negative electrode sheet of the battery in Comparative Example 3 is 820 nm, and the content of the dielectric material in the negative electrode active material layer is 12%; no dielectric material particles are added to the active material layer of the negative electrode sheet of the battery in Comparative Example 4; in addition, the lithium precipitation area of the negative electrode sheet disassembled from each of the batteries in Examples 1 to 18 after cycling is significantly less than that of Comparative Examples 1 to 4, the charging time of the batteries in Examples 1 to 18 is also significantly shorter than that of Comparative Examples 1 to 4, and the cycling performance of the batteries in Examples 1 to 18 is also better than that of Comparative Examples 1 to 4.

This indicates that the use of the dielectric material particles (the volume-based mean particle size Dᵥ50 of the dielectric material particles is 400 nm to 2000 nm, and a proportion of the dielectric material particles is 0.1% to 10% based on the total mass of the negative electrode active material layer) in the negative electrode sheet of this application can not only reduce loss of active ions and the risk of lithium precipitation, but also improve the cycling performance and fast charging performance of the battery.

It should be noted that this application is not limited to the above embodiments. The above embodiments are merely examples, and embodiments that have substantially the same structure and achieve the same effects within the scope of the technical solution of this application are all included within the technical scope of this application. In addition, various modifications that can be conceived by those skilled in the art and other forms formed by combining some constituent elements of the embodiments, without departing from the gist of this application, are also included within the scope of this application.

## Claims

1. A negative electrode sheet, comprising:
a negative electrode current collector; and
a negative electrode active material layer, wherein the negative electrode active material layer is disposed on at least one side of the negative electrode current collector, wherein the negative electrode active material layer comprises dielectric material particles, a volume-based mean particle size Dᵥ50 of the dielectric material particles is D₁, D₁ is 400 nm to 2000 nm, and based on a total mass of the negative electrode active material layer, a proportion of the dielectric material particles is 0.1% to 10%.

2. The negative electrode sheet according to claim 1, wherein D₁ is 600 nm to 1000 nm.

3. The negative electrode sheet according to claim 1 or 2, wherein based on the total mass of the negative electrode active material layer, the proportion of the dielectric material particles is 0.5% to 3%.

4. The negative electrode sheet according to any one of claims 1 to 3, wherein a relative dielectric constant of the dielectric material particles is 1000 to 10000.

5. The negative electrode sheet according to any one of claims 1 to 4, wherein the relative dielectric constant of the dielectric material particles is 1500 to 5000.

6. The negative electrode sheet according to any one of claims 1 to 5, wherein the dielectric material particles comprise at least one of barium titanate, lead titanate, lithium niobate, lead zirconate titanate, lead metaniobate, or lithium barium lead niobate.

7. The negative electrode sheet according to any one of claims 1 to 6, wherein the dielectric material particles comprise doping ions, and the doping ions comprise at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺.

8. The negative electrode sheet according to any one of claims 1 to 7, wherein the dielectric material particles comprise at least one of barium titanate doped with trivalent rare earth metal ions, barium titanate doped with pentavalent ions, lead titanate doped with pentavalent ions, or lead zirconate titanate doped with pentavalent ions, wherein the pentavalent ions comprise at least one of Nb⁵⁺, W⁵⁺, or Mo⁵⁺.

9. The negative electrode sheet according to claim 7 or 8, wherein the trivalent rare earth metal ions comprise at least one of Sc³⁺, Y³⁺, or Yb³⁺.

10. The negative electrode sheet according to claim 6 or 8, wherein the barium titanate comprises a tetragonal crystal form.

11. The negative electrode sheet according to any one of claims 1 to 10, wherein a BET specific surface area of the dielectric material particles is 0.8 m²/g to 7 m²/g.

12. The negative electrode sheet according to any one of claims 1 to 11, wherein the negative electrode active material layer comprises a negative electrode active material, and a volume-based mean particle size Dᵥ50 of the negative electrode active material is D₂, wherein D₁ ≤ D₂.

13. The negative electrode sheet according to claim 12, wherein D₂ is 2 µm to 20 µm.

14. The negative electrode sheet according to claim 12 or 13, wherein D₂ is 8 µm to 13 µm.

15. The negative electrode sheet according to any one of claims 1 to 14, wherein the negative electrode active material layer comprises:
a first negative electrode active material layer, wherein the first negative electrode active material layer is disposed on at least one side of the negative electrode current collector; and
a second negative electrode active material layer, wherein the second negative electrode active material layer is disposed on a side of the first negative electrode active material layer away from the negative electrode current collector, and the first negative electrode active material layer and/or the second negative electrode active material layer comprises the dielectric material particles.

16. The negative electrode sheet according to any one of claims 12 to 14, wherein at least a portion of a surface of the negative electrode active material is provided with a coating layer, and the coating layer comprises the dielectric material particles.

17. The negative electrode sheet according to any one of claims 12 to 14, wherein the negative electrode active material comprises at least one of artificial graphite, natural graphite, soft carbon, hard carbon, a silicon-based material, a tin-based material, or titanate.

18. A preparation method of a negative electrode sheet, comprising:
forming a negative electrode active material layer on at least one side of a negative electrode current collector, wherein the negative electrode active material layer comprises dielectric material particles, a volume-based mean particle size Dᵥ50 of the dielectric material particles is D₁, D₁ is 400 nm to 2000 nm, and based on a total mass of the negative electrode active material layer, a proportion of the dielectric material particles is 0.1% to 10%.

19. A battery, comprising the negative electrode sheet according to any one of claims 1 to 17 or a negative electrode sheet obtained by the method according to claim 18.

20. The battery according to claim 19, wherein the battery comprises a lithium-ion battery or a sodium-ion battery.

21. An electric apparatus, comprising the battery according to claim 19 or 20.
